# EUROPÄISCHE PATENTSCHRIFT

(11) **EP 2 430 401 B1**
(45) Veröffentlichungstag und Bekanntmachung des Hinweises auf die Patenterteilung: **12.06.2019**
(21) Anmeldenummer: 10716505.2
(22) Anmeldetag: 01.04.2010
(51) Int. Cl.: G01D 5/14, G01D 5/252

(54) **POSITIONSERFASSUNGSANORDNUNG FÜR EIN UMLAUFENDES TRANSFERSYSTEM**
POSITIONING SYSTEM FOR A ROTARY TRANSFER SYSTEM
ENSEMBLE DE DÉTECTION DE POSITION POUR SYSTÈME DE TRANSFERT CIRCULAIRE

(30) Priorität: 13.05.2009 DE 102009003080
(43) Veröffentlichungstag der Anmeldung: 21.03.2012
(73) Patentinhaber: Robert Bosch GmbH, 70442 Stuttgart (DE)
(72) Erfinder: LOECHT, Heinrich, 76461 Muggensturm (DE)
(86) Internationale Anmeldenummer: PCT/EP2010/054427
(87) Internationale Veröffentlichungsnummer: WO 2010/130506

(56) Entgegenhaltungen:
- EP-B1- 1 649 250
- WO-A2-02/27354
- DE-A1- 10 124 943
- US-B1- 6 625 517

## Beschreibung

### Stand der Technik

Die vorliegende Erfindung betrifft eine Positionserfassungsanordnung für ein umlaufendes Transfersystem, welches insbesondere in der Verpackungsmaschinentechnik verwendet wird.

Umlaufende Transfersysteme werden beispielsweise im Bereich von Verpackungsmaschinen zu deren Beschickung mit zu verpackenden Gütern, wie z.B. Schokoladenriegel, Beutel, Flaschen, usw., verwendet. Derartige umlaufende Transfersysteme umfassen dabei eine umlaufende Transportstrecke sowie eine Vielzahl von Läufern, welche um die Transportstrecke umlaufen und dabei die Transportaufgaben ausführen. Insbesondere bei der Verwendung von mehr als einem Läufer wäre es für eine Steuerung der Läufer vorteilhaft, die exakte Position der Läufer zu bestimmen. Dies ist insbesondere dann vorteilhaft, wenn die Läufer unabhängig voneinander mit verschiedenen Geschwindigkeiten angetrieben werden können und somit sich Relativpositionen zwischen den einzelnen Läufern verändern können.

Aus der DE 43 35 004 C2 ist ein Messsystem mit einem Sensor bekannt, bei dem eine definierte elektrische Widerstandsstrecke und eine den Bahnverlauf der Widerstandsstrecke folgende Kontaktelektrode in einem Isolierabstand angeordnet sind, wobei bei Durchführen eines Kontaktes zwischen der Kontaktelektrode und der Widerstandsstrecke eine Position des Kontaktes bestimmbar ist. Ein derartiger Sensor ist jedoch für ein umlaufendes Transfersystem nicht zweifelsfrei geeignet, da er nicht verschleißfrei arbeitet und insbesondere hohe Herstellkosten aufweist.

Aus der EP 1649250B1 sind eine Vorrichtung und ein Verfahren zur Erfassung des Weges eines Zielobjekts bekannt. Das Zielobjekt wird über einzelne Sensoren geführt, wenn es entlang den Führungsnuten bewegt wird.

Aus der US 6625517 ist ein Positionsrückmeldesystem und ein Verfahren zum bestimmungsgemäßen Gebrauch bekannt. Hierzu umfasst die Maschine magnetoresistive Sensoren und nicht-absolute Sensoren wie beispielsweise Hall-Sensoren.

Aus der WO 02/27354A2 ist ein berührungsloses Positionsanzeigesystem bekannt. Hierbei wird eine Zielanordnung auf einem ersten Teil relativ beweglich zu einem zweiten Teil angeordnet. Das zweite Teil umfasst Sensoren, die das Magnetfeld der Zielanordnung detektieren.

Aus der DE 10124943 A1 sind ein Sensormodul und Detektoranordnung zur Zeilen weisen optischen Abtastung eines bewegten Objekts bekannt. Diese setzt sich aus einer Vielzahl von Sensormodulen zusammen, sodass die Beobachtungslinien aller Sensormodule in einer Ebene liegen.

### Offenbarung der Erfindung

Die erfindungsgemäße Positionserfassungsanordnung mit den Merkmalen des Anspruchs 1 weist demgegenüber den Vorteil auf, dass sie verschleißfrei arbeitet und ein sehr kostengünstiges absolutes Weg-Messsystem bereitstellt. Weiterhin ist dabei ein modularer Aufbau möglich, so dass beliebige Transportstrecken mit der erfindungsgemäßen Positionserfassungsanordnung ausrüstbar sind. Ein weiterer großer Vorteil der erfindungsgemäßen Positionserfassungsanordnung ist darin zu sehen, dass auf den Läufern kein aktiver Sensor erforderlich ist, so dass eine Zuführung von elektrischer Energie bzw. eine Übertragung von Messsignalen auf bzw. von dem Läufer vermieden werden kann. Dies wird erfindungsgemäß dadurch erreicht, dass die Positionserfassungsanordnung eine Vorrichtung zur Positionserfassung mit einer Vielzahl von Positionssensoren aufweist, welche an der Transportstrecke angeordnet sind. Die Positionssensoren sind dabei in zwei zueinander parallel angeordneten Reihen vorgesehen. Dabei weisen die Positionssensoren freie Enden auf, welche senkrecht zur Laufrichtung überlappende Bereiche bilden. Hierdurch kann erfindungsgemäß eine Position jedes an der Transportstrecke angeordneten Läufers sicher bestimmt werden. Erfindungsgemäß umfasst die Vorrichtung zur Positionserfassung eine Sensorplatine, auf der mehrere Positionssensoren angeordnet sind. Die Sensorplatine ist dabei an der umlaufenden Transportstrecke angeordnet. Hierdurch ist es möglich, dass für mehrere Positionssensoren einer Sensorplatine eine gemeinsame Leitung zur elektrischen Versorgung bzw. zur Messsignalübertragung vorgesehen wird. Besonders bevorzugt werden derartige Leitungen an der Unterseite der Sensorplatine angeordnet. Somit können mehrere Positionssensoren auf einer gemeinsamen Sensorplatine angeordnet werden, was insbesondere die Montage am umlaufenden Transfersystem vereinfacht. Besonders bevorzugt umfasst die Positionserfassungsanordnung eine Vielzahl von Sensorplatinen, welche jeweils definierte Stützstellen aufweisen. Dadurch können beliebige umlaufende Transportstrecken mittels einzelner, vorgefertigter Sensorplatinen-Baueinheiten ausgestattet werden, wodurch eine schnelle und einfache Anpassung an unterschiedlichste Transportstrecken mit standardisierten Sensorplatinen möglich ist. Durch die standardisierten Schnittstellen können dabei verschiedenartig geformte Sensorplatinen beliebig miteinander kombiniert werden. Als einzelne Sensorplatinen-Bauelemente können beispielsweise gerade Strecken, 90°-Kurven, 180°-Kurven oder Kurven mit anderen beliebigen Bogenlängen, z.B. 45° oder 120°, vorgesehen werden. Die einzelnen Sensorplatinen weisen dabei bevorzugt eine gemeinsame elektrische Versorgung und/oder gemeinsame Messleitungen auf, welche bevorzugt an der Unterseite der Sensorplatinen angeordnet sind, wohingegen die Positionssensoren an einer Oberseite der Sensorplatinen angeordnet sind.

Die Unteransprüche zeigen bevorzugte Weiterbildungen der Erfindung.

Besonders bevorzugt ist eine Länge jedes Positionssensors in Laufrichtung gleich lang oder größer wie eine Länge eines Geberbereichs des Läufers in Laufrichtung. Dadurch wird sichergestellt, dass einzelne Positionssensoren zeitgleich nur durch jeweils einen Läufer überdeckt werden können.

Weiter bevorzugt ist der Geberbereich des Läufers seitlich neben den Positionssensoren der beiden zueinander parallelen Reihen angeordnet, so dass sich eine Überdeckung zwischen Positionssensoren und Läufer ergibt.

Weiter bevorzugt sind die beiden parallelen Reihen von Positionssensoren nebeneinander angeordnet. Alternativ sind die beiden parallelen Reihen der Positionssensoren übereinander angeordnet, wobei dann vorzugsweise zwischen den beiden übereinander angeordneten Reihen eine Magnetfelder abschirmende Trennwand angeordnet ist. Diese Trennwand ist vorzugsweise ein dünnes Blech, insbesondere mit einer Dicke im µ-Bereich und besonders bevorzugt eine Metallfolie.

Um besonders kostengünstig herstellbar zu sein, sind die einzelnen Positionssensoren bevorzugt als ohmsche oder induktive Sensoren ausgebildet. Beide Sensortypen können mittels Siebdruck in Dickschichttechnologie besonders kostengünstig hergestellt werden. Weiter bevorzugt sind dabei Leiterbahnen zum Anschluss einer Versorgungsspannung und Messsignalleitungen auf einer Unterseite der Sensoren angeordnet.

Der Aufbau der erfindungsgemäßen Positionserfassungsanordnung kann weiter vereinfacht werden, wenn an jedem Läufer wenigstens ein Permanentmagnet angeordnet ist. Hierdurch weist jeder Läufer ein definiertes Magnetfeld als Geberbereich auf, anhand dessen die Position des Läufers erfasst werden kann. Alternativ ist eine Spule für die induktive Wegerfassung vorgesehen.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Seitenansicht einer Positionserfassungsanordnung gemäß einem Ausführungsbeispiel der Erfindung, und
- Figur 2-4: Darstellungen unterschiedlicher Sensorplatinen.

### Bevorzugte Ausführungsform der Erfindung

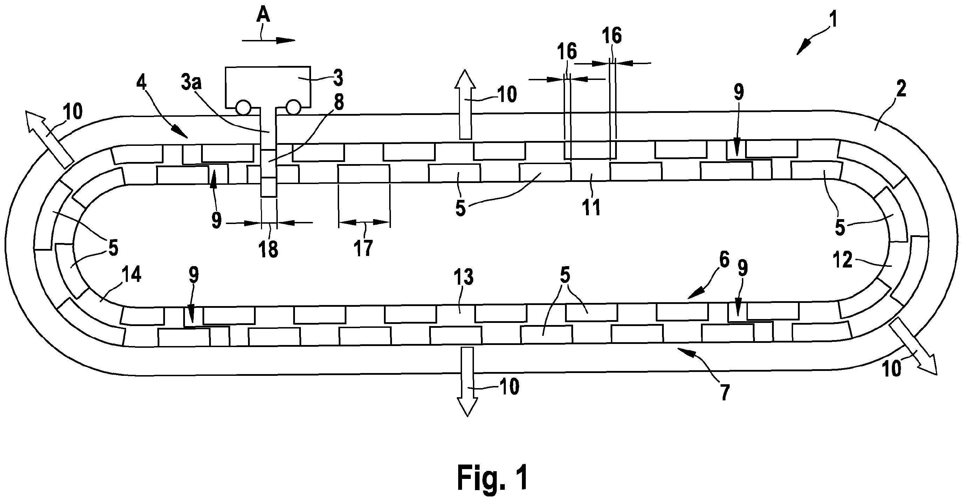

Nachfolgend wird unter Bezugnahme auf die Figuren 1 bis 4 eine Positionserfassungsanordnung 1 gemäß einem bevorzugten Ausführungsbeispiel der Erfindung im Detail beschrieben.

Wie aus Figur 1 ersichtlich ist, umfasst die Positionserfassungsanordnung 1 eine umlaufende Transportstrecke 2, auf welcher ein Läufer 3 derart angeordnet ist, dass er um die Transportstrecke 2 umlaufen kann. In Figur 1 ist aus Vereinfachungsgründen lediglich ein Läufer 3 dargestellt, es sind jedoch beliebig viele Läufer an der Transportstrecke 2 anordenbar. Der Pfeil A gibt dabei eine Laufrichtung des Läufers 3 an. Der Läufer 3 dient dabei zur Beförderung von Gütern, z.B. zur Beschickung einer Verpackungsanlage.

An der Transportstrecke 2 ist ferner eine Positionserfassungsvorrichtung 4 in Form einer Sensorplatine angeordnet. Die Positionserfassungsvorrichtung 4 bildet die gleiche Wegstrecke wie die Transportstrecke 2 nach und dient zur exakten Positionserfassung des Läufers 3. Die Positionserfassungsvorrichtung 4 umfasst eine Vielzahl von Positionssensoren 5, welche in diesem

Ausführungsbeispiel in einer ersten Reihe 6 und einer zweiten Reihe 7 angeordnet sind. Pro Reihe sind die Positionssensoren 5 dabei von einander beabstandet angeordnet, wobei an den entsprechenden Lücken der ersten Reihe 6 jeweils die Positionssensoren der zweiten Reihe 7 angeordnet sind. Dabei sind die Positionssensoren 5 derart angeordnet, dass sie an ihrem in Laufrichtung A liegenden Anfang und ihrem in Laufrichtung A liegenden Ende jeweils einen kurzen Überlappungsbereich 16 haben. Die Positionssensoren 5 weisen dabei in Laufrichtung des Läufers eine Länge 17 auf, welche länger ist als eine positionsrelevante Länge 18 eines Geberbereichs 3a des Läufers 3. Wie aus Figur 1 ersichtlich ist, ist die positionsrelevante Länge 18 des Läufers 3 in diesem Ausführungsbeispiel durch den vorstehenden Geberbereich 3a gebildet. Der vorstehende Geberbereich 3a ist dabei seitlich an der Sensorplatine angeordnet und weist einen Permanentmagnet 8 auf. Der Permanentmagnet 8 ist dabei derart angeordnet, dass er bei einer Bewegung des Läufers 3 sowohl die Positionssensoren der ersten Reihe 6 als auch die Positionssensoren der zweiten Reihe 7 zumindest teilweise überdeckt. Der Permanentmagnet 8 bildet somit einen Geber für den Läufer 3.

Die Positionssensoren 5 in diesem Ausführungsbeispiel sind jeweils als Potentiometer ausgebildet. Entsprechend einer Änderung einer Relativposition des Permanentmagneten 8 durch eine Bewegung des Läufers 3 ändert sich der elektrische Widerstand an dem jeweiligen Positionssensor 5, durch den der jeweilige Positionssensor 5 als Spannungsteiler geschaltet wird, wodurch man eine sich relativ zur Stellung des Permanentmagneten 8 ändernde elektrische Spannung am Potentiometer erhält. Hierdurch kann eine exakte Position des Läufers 3 definiert werden.

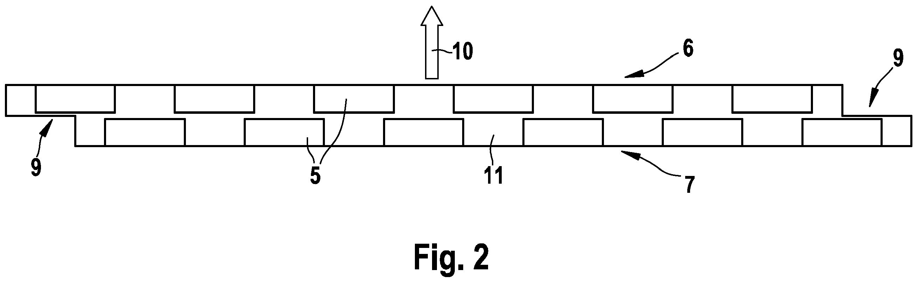

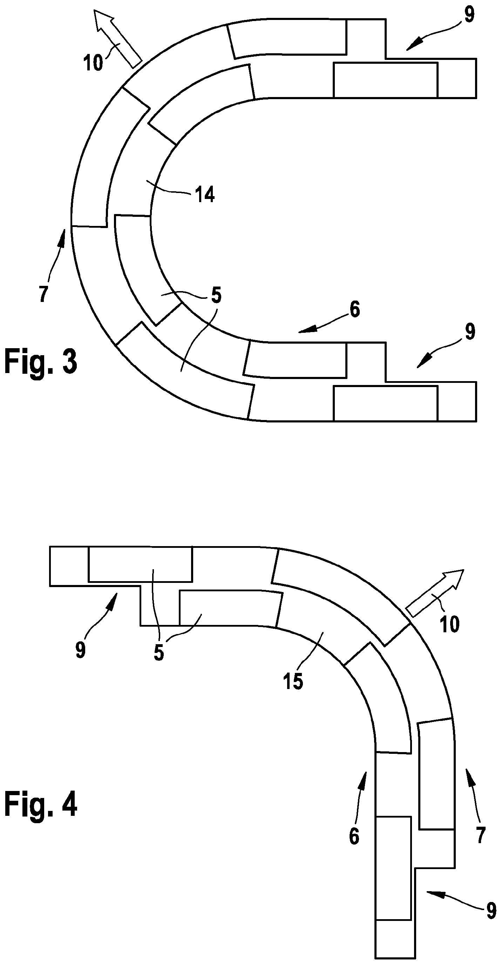

Die Positionssensoren 5 dieses Ausführungsbeispiels sind als einfach herstellbare Potentiometer ausgebildet, wobei mehrere Positionssensoren 5 jeweils auf einem separaten Platinenteil angeordnet sind. Die Vielzahl von Positionssensoren pro Platinenteil weist dabei eine gemeinsame elektrische Versorgungs- und Messleitung auf, die jeweils in den Figuren mit dem Bezugszeichen 10 bezeichnet sind. Wie aus Figur 1 ersichtlich ist, ist die Sensorplatine dieses Ausführungsbeispiels aus vier separaten Platinenteilen 11, 12, 13, 14 zusammengefügt, wobei die Platinenteile an ihren freien Enden jeweils eine definierte Schnittstelle 9 aufweisen. Die Transportstrecke 2 dieses Ausführungsbeispiels wird somit durch die vier Platinenteile 11, 12, 13, 14 abgebildet, wobei die Platinenteile 11 und 13 geradlinige Platinenteile sind und die Platinenteile 12 und 14 180°-Bögen sind. Die definierten Schnittstellen 9 sind dabei jeweils durch entsprechend gebildete Ausnehmungen an der ersten Reihe 6 bzw. der zweiten Reihe 7 ausgeführt, so dass die einzelnen Platinenteile beliebig über die definierten Schnittstellen 9 kombinierbar sind. Die Figuren 2 und 3 zeigen dabei die im Ausführungsbeispiel von Figur 1 verwendeten Platinenteile und die Figur 4 zeigt eine weitere Alternative eines Platinenteils 15 in Form eines 90°-Bogens. Es sei angemerkt, dass selbstverständlich auch andere, geometrisch beliebig geformte Platinenteile mit entsprechender gleicher Schnittstelle 9 vorgesehen werden können. Somit kann ein modulartiger Aufbau der Sensorplatine für die Positionserfassungsvorrichtung 4 bereitgestellt werden, so dass beliebige umlaufende Transportsysteme nachgebildet werden können.

Erfindungsgemäß ist somit möglich, eine Position des Läufers 3 immer exakt zu bestimmen, da der Permanentmagnet 8 am Läufer 3 entweder mit einem Positionssensor 5 der ersten Reihe 6 oder mit einem Positionssensor 5 der zweiten Reihe 7 in Wirkverbindung steht. Durch die Überlappungen 16 zwischen den Positionssensoren der ersten und zweiten Reihe wird somit sichergestellt, dass an der Transportstrecke 2 keine Position vorhanden ist, an der kein Positionssensor angeordnet ist. Die erhaltenen Positionssignale werden über die Leitungen 10 bei einer nicht gezeigten Steuereinheit zugeführt, welche dann in entsprechender Weise Beschleunigungs- oder Verzögerungsbefehle an die jeweiligen Läufer 3 geben kann, um z.B. definierte Abstände oder definierte Fördergeschwindigkeiten aufrecht zu erhalten. Da zwischen dem Läufer 3 und der Positionserfassungsvorrichtung 4 kein Kontakt besteht, ist die erfindungsgemäße Positionserfassungsanordnung vollständig verschleißfrei und kann dabei sehr kostengünstig herstellbar sein. Der modulare Aufbau ermöglicht dabei beliebige Transportstrecken, ohne dass hierbei Sonderanfertigungen für die einzelnen Platinenteile der Sensorplatine notwendig wären. Ferner können bestehende Transportsysteme einfach erweitert werden, falls notwendig. Darüber hinaus sind am Läufer 3 keine aktiven Sensor vorhanden, so dass auf eine aufwendige Zuführung von elektrischer Energie bzw. eine Übertragung von Messsignalen vom oder zum Läufer 3 verzichtet werden kann. Dabei bleibt der Aufbau der erfindungsgemäßen Positionserfassungsanordnung sehr einfach und kostengünstig.

## Patentansprüche

1. Positionserfassungsanordnung (1) für ein umlaufendes Transfersystem, umfassend:
- eine umlaufende Transportstrecke (2),
- wenigstens einen Läufer (3), welcher an der Transportstrecke (2) umläuft, und
- eine Positionserfassungsvorrichtung (4) mit einer Vielzahl von Positionssensoren (5), welche an der Transportstrecke (2) angeordnet sind,
- wobei die Positionssensoren (5) in einer ersten Reihe (6) und einer zweiten Reihe (7) angeordnet sind, wobei die erste Reihe (6) zur zweiten Reihe (7) parallel angeordnet ist, und
- die Positionssensoren (5) in jeder Reihe voneinander beabstandet angeordnet sind und an den entsprechenden Lücken der ersten Reihe (6) jeweils die Positionssensoren (5) der zweiten Reihe (7) angeordnet sind, wobei die Positionssensoren (5) in Laufrichtung (A) in der ersten und zweiten Reihe (6, 7) derart angeordnet sind, dass sie an ihrem in Laufrichtung (A) liegenden Anfang und ihrem in Laufrichtung (A) liegenden Ende jeweils überlappende Bereiche (16) aufweisen, **dadurch gekennzeichnet, dass**
- die Positionserfassungsvorrichtung (4) eine Sensorplatine aufweist, auf der die Vielzahl von Positionssensoren (5) angeordnet sind, wobei die Sensorplatine an der gesamten umlaufenden Transportstrecke (2) angeordnet ist, wobei die Sensorplatine eine Vielzahl von Platinenteilen (11-14) umfasst, und wobei die Platinenteile (11-14) jeweils definierte Schnittstellen (9) an ihren freien Enden aufweisen.

2. Positionserfassungsanordnung nach Anspruch 1, **dadurch gekennzeichnet, dass** die Positionssensoren (5) in Laufrichtung (A) eine Länge aufweisen, welche gleich oder größer ist als eine Länge (18) eines Geberbereichs (3a) der Läufer (3), welche in Wirkverbindung mit den Positionssensoren (5) steht.

3. Positionserfassungsanordnung nach einem der vorhergehenden Ansprüche, **dadurch gekennzeichnet, dass** die erste Reihe (6) und die zweite Reihe (7) nebeneinander angeordnet sind und der Geberbereich (3a) am Läufer (3) die erste und zweite Reihe (6, 7) seitlich überdeckt.

4. Positionserfassungsanordnung nach Anspruch 1 oder 2, **dadurch gekennzeichnet, dass** die erste und zweite Reihe (6, 7) übereinander angeordnet sind und der Geberbereich (3a) des Läufers (3) über den beiden Reihen (6, 7) angeordnet ist.

5. Positionserfassungsanordnung nach Anspruch 4, **dadurch gekennzeichnet, dass** zwischen den beiden Reihen (6, 7) eine Magnetfelder abschirmende Trennwand angeordnet ist und die Trennwand ein dünnes Blech, insbesondere mit einer Dicke im µ-Bereich ist.

6. Positionserfassungsanordnung nach einem der vorhergehenden Ansprüche, **dadurch gekennzeichnet, dass** die Positionssensoren (5) als ohmsche oder induktive Sensoren, insbesondere als Potentiometer oder induktive Weggeber, ausgebildet sind.

7. Positionserfassungsanordnung nach einem der vorhergehenden Ansprüche, **dadurch gekennzeichnet, dass** am Läufer (3) wenigstens ein Permanentmagnet (8) als Geber für die Positionssensoren (5) oder eine Spule für die induktive Wegerfassung angeordnet ist.

8. Positionserfassungsanordnung nach Anspruch1, **dadurch gekennzeichnet, dass** eine elektrische Versorgungsleitung und/oder eine Messleitung an einer Unterseite der Sensorplatine angeordnet ist und die Positionssensoren (5) an einer Oberseite der Sensorplatine angeordnet sind.

## Claims

1. Positioning system (1) for a traveling transfer system, comprising:
- a traveling transport section (2),
- at least one traveler (3) which travels on the transport section (2), and
- a positioning device (4) having a multiplicity of position sensors (5) which are arranged on the transport section (2),
- the position sensors (5) being arranged in a first row (6) and in a second row (7), the first row (6) being arranged parallel to the second row (7), and
- the position sensors (5)being arranged spaced apart from one another in each row and the position sensors (5) of the second row (7) each being arranged at the respective gaps of the first row (6), the position sensors (5) being arranged in the first and second rows (6, 7) in the direction of travel (A) in such a manner that they each have overlapping regions (16) at their beginning lying in the direction of travel (A) and their end lying in the direction of travel (A), **characterized in that**
- the positioning device (4) has a sensor printed circuit board on which the multiplicity of position sensors (5) are arranged, the sensor printed circuit board being arranged on the entire traveling transport section (2), the sensor printed circuit board comprising a multiplicity of printed circuit board parts (11-14), and the printed circuit board parts (11-14) each having defined interfaces (9) at their free ends.

2. Positioning system according to Claim 1, **characterized in that** the position sensors (5) have a length which is the same as or greater than a length (18) of a detector region (3a) of the travelers (3) in the direction of travel (A), which is operatively connected to the position sensors (5).

3. Positioning system according to either of the preceding claims, **characterized in that** the first row (6) and the second row (7) are arranged beside one another, and the detector region (3a) on the traveler (3) laterally covers the first and second rows (6, 7).

4. Positioning system according to Claim 1 or 2, **characterized in that** the first and second rows (6, 7) are arranged above one another, and the detector region (3a) of the traveler (3) is arranged above the two rows (6, 7).

5. Positioning system according to Claim 4, **characterized in that** a partition which shields magnetic fields is arranged between the two rows (6, 7), and the partition is a thin sheet, in particular with a thickness in the µ range.

6. Positioning system according to one of the preceding claims, **characterized in that** the position sensors (5) are in the form of resistive or inductive sensors, in particular in the form of potentiometers or inductive displacement detectors.

7. Positioning system according to one of the preceding claims, **characterized in that** at least one permanent magnet (8) is arranged on the traveler (3) as a detector for the position sensors (5) or as a coil for the inductive displacement measurement.

8. Positioning system according to Claim 1, **characterized in that** an electrical supply line and/or a measuring line is/are arranged on an underside of the sensor printed circuit board, and the position sensors (5) are arranged on a top side of the sensor printed circuit board.

## Revendications

1. Ensemble de détection de position (1) pour un système de transfert circulaire, comprenant :
- une voie de transport circulaire (2),
- au moins un chariot (3) circulant sur la voie de transport (2), et
- un dispositif de détection de position (4) pourvu d'une pluralité de capteurs de position (5) disposés sur la voie de transport (2),
- les capteurs de position (5) étant disposés en une première rangée (6) et une seconde rangée (7), la première rangée (6) étant disposée parallèlement à la seconde rangée (7), et
- les capteurs de position (5) sont disposés de manière espacée les uns des autres dans chaque rangée et les capteurs de position (5) de la deuxième rangée (7) sont respectivement disposés aux emplacements correspondants de la première rangée (6), les capteurs de position (5) étant disposés dans le sens de marche (A) dans les première et seconde rangées (6, 7) de manière à ce qu'ils présentent respectivement des zones (16) se chevauchant à leur point de départ dans le sens de marche (A) et à leur extrémité située dans le sens de marche (A), **caractérisé en ce que**
- le dispositif de détection de position (4) comporte une plaquette de capteurs sur laquelle sont disposés la pluralité de capteurs de position (5), la plaquette de capteurs étant disposée sur la totalité de la voie de transport circulaire (2), la plaquette de capteurs comprenant une pluralité de parties de plaquette (11-14), et les parties de plaquette (11-14) présentant respectivement des interfaces définies (9) à leurs extrémités libres.

2. Ensemble de détection de position selon la revendication 1, **caractérisé en ce que** les capteurs de position (5) présentent, dans le sens de marche (A), une longueur égale ou supérieure à une longueur (18) d'une zone de transducteur (3a) des chariots (3), qui est en liaison fonctionnelle avec les capteurs de position (5).

3. Ensemble de détection de position selon l'une des revendications précédentes, **caractérisé en ce que** la première rangée (6) et la seconde rangée (7) sont disposées côte à côte et **en ce que** la région de transducteur (3a) présente sur le chariot (3) recouvre latéralement les première et seconde rangées (6, 7).

4. Ensemble de détection de position selon la revendication 1 ou 2, **caractérisé en ce que** les première et seconde rangées (6, 7) sont disposées l'une au-dessus de l'autre et **en ce que** la zone de transducteur (3a) du chariot (3) est disposée au-dessus des deux rangées (6, 7).

5. Ensemble de détection de position selon la revendication 4, **caractérisé en ce qu'**une paroi de séparation formant blindage contre les champs magnétiques est disposée entre les deux rangées (6, 7) et **en ce que** la paroi de séparation est une tôle mince, présentant en particulier une épaisseur de l'ordre du micromètre.

6. Ensemble de détection de position selon l'une des revendications précédentes, **caractérisé en ce que** les capteurs de position (5) sont réalisés sous la forme de capteurs ohmiques ou à induction, en particulier de potentiomètres ou de capteurs de déplacement à induction.

7. Ensemble de détection de position selon l'une revendications précédentes, **caractérisé en ce qu'**il est prévu sur le chariot (3) au moins un aimant permanent (8) en tant que transducteur pour les capteurs de position (5), ou une bobine pour la détection de déplacement par induction.

8. Ensemble de détection de position selon la revendication 1, **caractérisé en ce qu'**une ligne d'alimentation électrique et/ou une ligne de mesure est disposée sur une face inférieure de la plaquette de capteurs et **en ce que** les capteurs de position (5) sont disposés sur une face supérieure de la plaquette de capteurs.
